Europäisches Patentamt

European Patent Office

Office européen des brevets

(19)

(11)  EP 0 798 031 B1

(12)  FASCICULE DE BREVET EUROPEEN

(45) Date de publication et mention
de la délivrance du brevet:
**28.11.2001   Bulletin 2001/48**

(51) Int Cl.⁷: **B01D 53/48**, B01D 53/68,
B01D 53/75

(21) Numéro de dépôt: **97400690.0**

(22) Date de dépôt: **26.03.1997**

(54) **Procédé et installation de traitement de fumées**

Verfahren und Einrichtung zur Behandlung von Rauchgasen

Process and device for treating flue gases

(84) Etats contractants désignés:
**BE DE ES GB IT LU PT**

(30) Priorité: **29.03.1996   FR 9604016**

(43) Date de publication de la demande:
**01.10.1997   Bulletin 1997/40**

(73) Titulaire: **CONSTRUCTIONS INDUSTRIELLES
DE LA MEDITERRANEE- CNIM
F-75008 Paris (FR)**

(72) Inventeurs:
 • **Laborel, Yann
13260 Cassis (FR)**

 • **Durand, Jean-Pierre
83500 LA Seyne sur Mer (FR)**

(74) Mandataire: **Bentz, Jean-Paul et al
Cabinet Weinstein,
56 A, rue du Faubourg Saint-Honoré
75008 Paris (FR)**

(56) Documents cités:
**EP-A- 0 238 811          WO-A-96/16721
DE-A- 2 939 744          DE-A- 4 401 441
GB-A- 2 146 261**

## Description

L'invention se rapporte à un procédé de traitement de fumées produites lors de la combustion de déchets ménagers et/ou industriels. Elle vise également une installation pour la mise en oeuvre notamment de ce procédé.

Les fumées produites lors de la combustion des déchets ménagers et/ou industriels contiennent des gaz acides de deux catégories : gaz acide chlorhydrique et acide fluorhydrique d'une part et gaz soufrés d'autre part, qui sont toxiques et doivent donc être neutralisés avant rejet des fumées à l'atmosphère.

On connaît un procédé de traitement de telles fumées consistant à d'abord capter les gaz acide chlorhydrique et acide fluorhydrique par un premier lavage avec une solution aqueuse neutralisée à la chaux puis à procéder à un deuxième lavage des fumées, ne contenant plus ni acide chlorhydrique ni acide flurohydrique, en utilisant une solution neutralisée à la soude. Un tel procédé est décrit, par example, dans EP-A-238 811.

Le lavage des gaz acide chlorhydrique et acide fluorhydrique par une solution traitée à la chaux produit une saumure contenant, en solution, du chlorure de calcium et du fluorure de calcium, et en suspension, la chaux en excès. Le second lavage avec la solution traitée à la soude produit une saumure constituée d'une solution de sulfate de sodium.

Ces deux saumures sont alors, soit rejetées dans le milieu naturel après traitement physico-chimique dans une station de traitement des eaux, soit évaporées, par exemple en injectant les saumures dans le flux de fumées chaudes à traiter. Les sels et les produits de réaction solides produits lors de cette évaporation sont ensuite séparés des fumées par décantation et filtration. Un tel procédé, avec injection des saumures mélangées provenant de deux étapes de lavage, est décrit dans le document GB-A-2 146 261.

Dans ce procédé, les deux saumures (l'une de chlorure de calcium, l'autre de sulfate de sodium) sont mélangées avant injection dans le dispositif d'évaporation. Le mélange de ces saumures produit un précipité de gypse .

Le gypse, incrustant, obstrue rapidement les tuyauteries et équipements situés entre le point de mélange et le point d'injection de ces saumures, dans le flux de fumées chaudes à traiter, dans le cas où on procède à leur évaporation, ce qui oblige le personnel d'exploitation à intervenir très fréquemment et réduit d'autant la disponibilité du matériel.

La présente invention a pour but de pallier les inconvénients précédents en évitant la formation de gypse.

Ce but est atteint par l'invention qui propose un procédé de traitement des fumées produites lors de la combustion des déchets ménagers et/ou industriels du type consistant : à évaporer une solution aqueuse en refroidissant lesdites fumées, dans un réacteur ; à séparer les cendres volantes et les produits de réaction entraînés par les fumées, de la phase gazeuse dans un dépoussiéreur ; à solubiliser les gaz acide chlorhydrique et acide fluorhydrique contenus dans les fumées par un premier lavage à l'eau, dans une première tour de lavage, et à neutraliser à la chaux le liquide de lavage ; à solubiliser et à neutraliser les gaz soufrés contenus dans les fumées, par un second lavage avec une solution traitée à la soude, dans une deuxième tour de lavage ; à injecter et évaporer les purges des eaux de lavage, desdites première et deuxième tour de lavage, dans le réacteur ; caractérisé en ce que les purges précitées sont injectées cycliquement et alternativement dans le réacteur, chaque injection d'une desdites purges étant suivie d'un rinçage à l'eau des parties du circuit d'injection dans le réacteur, dans lesquelles les deux types de purges circulent alternativement.

L'invention propose également une installation pour la mise en oeuvre, notamment d'un procédé de traitement des fumées produits lors de la combustion des déchets ménagers et/ou industriels du type comprenan : un réacteur; un dépoussièreur; une première tour de lavage; une seconde tour de lavage; caractérisée en ce qu'elle comprend de plus : une première canalisation allant du circuit de lavage de la deuxième tour de lavage jusqu'à une vanne d'arrêt reliant cette première canalisation à une canalisation débouchant dans le réacteur; une seconde canalisation allant du récipient de réceptior et de neutralisation des purges provenant de la première tour de lavage jusqu'à une vanne d'arrêt reliant la seconde canalisation à la canalisation précitée débouchant dans le réacteur; et un circuit de rinçage de la canalisation débouchant dans le réacteur.

Selon une caractéristique de l'installation de l'invention celle-ci comprend de plus une canalisation supplémentaire allant de la vanne d'arrêt de la seconde canalisation jusqu'au récipient de réception et de neutralisation des purges provenant de la première tour de lavage, la vanne d'arrêt étant alors une vanne à trois voies qui permet en position dite "ouverte" l'injection du liquide provenant dudit récipient de réception et de neutralisation dans le réacteur et, en position dite "fermée", la circulation du liquide provenant du récipient de réception et de neutralisation à la vanne, par ladite seconde canalisation, et de la vanne en retour audit récipient de réception et de neutralisation par la canalisation supplémentaire.

Selon une autre caractéristique, de l'invention, le circuit de rinçage comprend un premier circuit de rinçage, muni d'une vanne, qui est relié à la seconde canalisation, à la sortie de la vanne reliée à la canalisation débouchant dans le réacteur.

Selon encore une autre caractéristique, le circuit de rinçage comprend un second circuit de rinçage, muni d'une vanne, relié à la sortie de la vanne de la première canalisation, reliée à la canalisation débouchant dans le réacteur.

Selon toujours une autre caractéristique, l'installation comprend de plus une quatrième canalisation allant de la vanne de la première canalisation vers le récipient de réception de la solution de lavage de la deuxième tour de lavage, cette vanne étant alors une vanne à trois voies qui permet, en position dite "ouverte" l'injection du liquide provenant du récipient dans le réacteur et en position dite "fermée" la circulation du liquide provenant du récipient de réception jusqu'à la vanne par la première canalisation, et de cette vanne jusqu'au récipient par ladite quatrième canalisation.

L'invention sera mieux comprise et d'autres buts, caractéristiques, détails et avantages de celle-ci apparaîtront plus clairement au cours de la description explicative qui va suivre faite en référence aux figures annexées dans lesquelles :

La figure 1 représente une installation de l'art antérieur pour la mise en oeuvre du procédé de l'art antérieur.

La figure 2 représente un mode de réalisation d'une installation pour la mise en oeuvre, notamment, du procédé de l'invention.

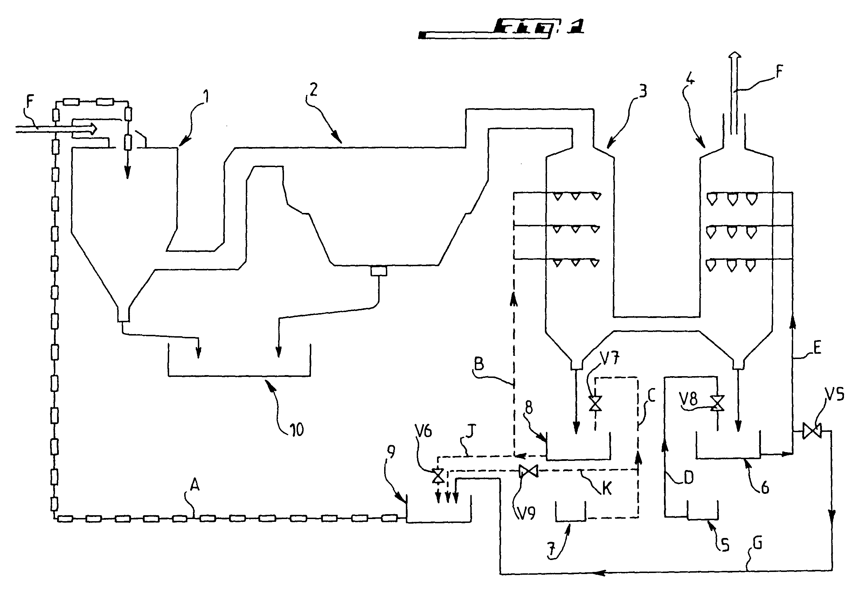

Le procédé et l'installation utilisés jusqu'à présent pour le traitement des fumées provenant de la combustion de déchets industriels et/ou ménagers vont maintenant être décrits en référence à la figure 1.

Comme on le voit sur la figure 1, les fumées chaudes F sont introduites dans le réacteur 1 où elles sont refroidies par évaporation d'une solution aqueuse. Une partie des solides obtenus par l'évaporatior de la saumure et une partie des cendres sont récupérées au bas du réacteur 1 dans un récipient de collecte 10. Les fumées F refroidies passent alors dans un dépoussièreur 2 où les produits solides non décantés dans le réacteur et entraînés par les fumées F sont séparés de la phase gazeuse et collectés en bas du dépoussièreur 2 et stockés dans le récipient 10. La phase gazeuse F est alors envoyée dans une première tour de lavage 3 et lavée avec une solution aqueuse contenue dans un récipient de stockage 8. Cette solution est envoyée en haut de la première tour par la canalisation B. Le lait de chaux contenu dans le récipient de stockage 7 alimente, d'une part le récipient 8 par la canalisation C compcrtant une vanne de réglage V7 afin de régler le débit et maintenir le pH de la solution à une valeur inférieure à 2 et, d'autre part le récipient 9 par la canalisation K comportant une vanne de réglage V9 permettant de régler le débit et de neutraliser complétement les acides chlorhydrique et fluorhydrique dissous dans la solution de lavage. La saumure résultant de cette opération et contenue dans le récipient 9 est constituée d'une solution de chlorure de calcium et de fluorure de calcium et d'un excès de chaux en suspension. Elle constitue la purge du système.

Les fumées F débarrassées des gaz acide chlorhydrique et acide fluorhydrique passent ensuite dans une seconde tour de lavage 4 où elles sont lavées avec une solution aqueuse stockée dans un récipient de réaction 6. La solution de soude contenue dans le récipient 5 est envoyée par la canalisation D munie de la vanne V8 dans le récipient de réception 6 afin de maintenir le pH à 7. La solution contenue dans le récipient 6 est envoyée par le circuit de lavage E au sommet de la deuxième tour de lavage 4. Les gaz soufrés contenus dans les fumées F sont solubilisés, et réagissent alors avec la soude pour former une solution chargée en sulfate de sodium. Cette saumure contenant du sulfate de sodium est alors recueillie dans le récipient 6 d'où elle est soit renvoyée au sommet de la seconde tour de lavage 4 par le circuit de lavage E, soit transférée par l'intermédiaire de la vanne V5 et de la canalisation G au récipient de stockage et de neutralisation des purges 9.

Les fumées ne contenant plus de gaz acides peuvent alors être rejetées à l'atmosphère.

La saumure contenue dans le récipient 9 est alors recyclée par la canalisation A à l'entrée du réacteur 1 où elle sert en tant que solution de refroidissement et où l'eau est évaporée et les sels contenus dans la saumure sont cristallisés. Ils peuvent alors être récupérés en bas du réacteur 1 pour stockage dans le récipient 10.

De plus, l'appoint d'eau est effectué dans le système grâce à deux arrivées d'eau (non représentées) alimentant les récipients 6 et 9 afin de maintenir un niveau constant dans ces récipients.

Cependant, le mélange des deux saumures dans le récipient 9 produit un précipité de gypse suivant les réactions :

$$(1) \qquad CaCl_2 + Na_2SO_4 \rightarrow CaSO_4 + 2\ NaCl$$

$$(2) \qquad CaF_2 + Na_2SO_4 \rightarrow CaSO_4 + 2\ NaF$$

On voit alors que des dépôts incrustants se produisent dans l'installation de la figure 1 pouvant aller jusqu'au bouchage dans le récipient 9 et à partir de ce récipient 9 jusqu'au réacteur 1, ce qui inclut la canalisation A. Egalement, tous les équipements d'amenée des saumures dans le réacteur 1 ainsi que les équipements tels que vannes de régulation, tuyauteries, système d'injection de la saumure dans le réacteur 1, seront également bouchés.

Ces bouchages entraînent un arrêt fréquent de l'installation pour débouchage et également un entretien très lourd des différents équipements : pompes, filtres, et système d'injection dans le réacteur 1.

Afin de supprimer cette maintenance et d'augmenter la disponibilité des équipements en évitant la formation de gypse, l'invention propose un procédé et une installation qui permettent d'éviter tout mélange des saumures chargées respectivement en $CaCl_2$ et $CaF_2$ d'une part et $Na_2SO_4$ d'autre part.

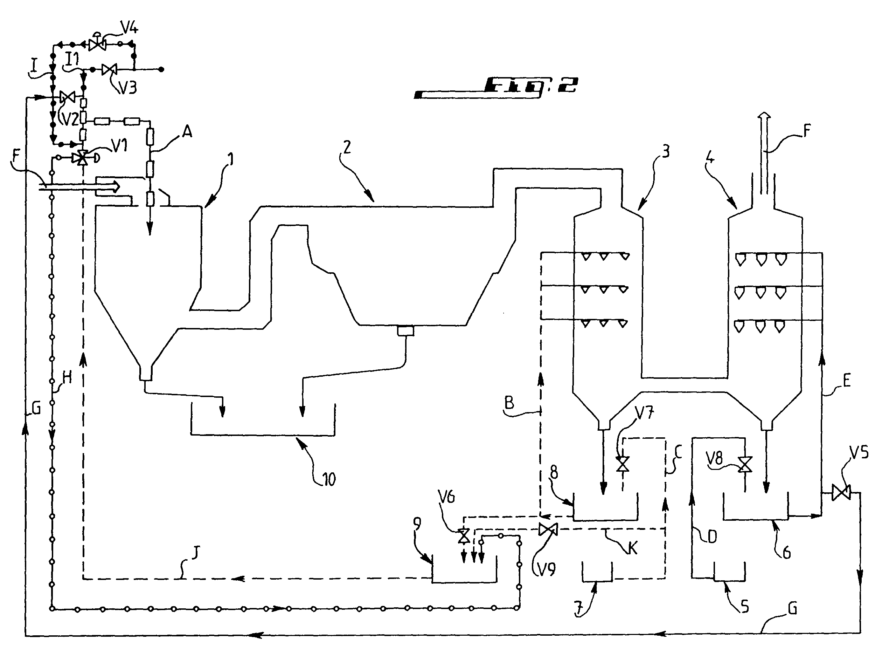

Pour cela, le procédé de l'invention sera décrit en référence à la figure 2. Dans la figure 2, les parties

communes avec la figure 1 sont notées par les mêmes lettres et chiffres.

Il consiste à injecter séparément et alternativement dans le réacteur 1 les saumures provenant du lavage des fumées F dans la première tour de lavage 3 et du lavage des fumées F dans la seconde tour de lavage 4. Cependant, une très faible portion de canalisation A et le système d'injection dans le réacteur 1, par ce procédé, sont toujours traversés par les deux solutions bien que cela se fasse alternativement. Afin d'éviter le bouchage de ces parties, le procédé de l'invention prévoit donc, un rinçage, par exemple à l'eau, de cette portion traversée alternativement par les deux saumures. Ce rinçage aura lieu systématiquement après chaque passage de l'une des solutions usées.

Un exemple d'une installation permettant la mise en oeuvre du procédé de l'invention est illustré en figure 2.

Ainsi, comme déjà décrit pour la figure 1, les fumées F sont introduites dans le réacteur 1 où elles sont refroidies par une solution aqueuse, puis une fois refroidies passent dans le dépoussièreur 2 où les cendres volantes sont séparées de la phase gazeuse. Cette phase gazeuse passe alors à travers la première tour de lavage 3 dans laquelle les gaz acide chlorhydrique et acide fluorhydrique sont dissous puis neutralisés par du lait de chaux qui est stocké dans le récipient de stockage 7 et amené de ce récipient 7 au récipient intermédiaire 8 par la canalisation C munie d'une vanne V7. Ensuite, la solution de lavage est envoyée du récipient intermédiaire 8 par la canalisation B au sommet de la première tour de lavage 3 pour séparation par dissolution des gaz acide chlorhydrique et acide fluorhydrique contenus dans les fumées F à traiter. La saumure produite chargée en chlorure de calcium et fluorure de calcium est alors évacuée de la tour de lavage 3 dans le récipient 8. Puis, comme dans le cas du procédé de l'art antérieur, la saumure est soit réinjectée dans la tour de lavage 3 par la canalisation B soit purgée en partie dans le récipient de réception des solutions usées 9 par l'intermédiaire d'une canalisation allant du récipient 8 au récipient 9 et munie d'une vanne V6. Un excès de chaux est ajouté dans le récipient 9 afin de finir la neutralisation des acides et maintenir le pH à une valeur élevée (12).

De la même façon que dans le cas de l'installation décrite en figure 1, l'appoint d'eau est effectué dans le système grâce à deux arrivées d'eau (non représentées) alimentant les récipients 6 et 9 afin de maintenir un niveau constant dans ces récipients.

Les fumées F débarrassées des gaz acide chlorhydrique et acide fluorhydrique passent ensuite dans la deuxième tour de lavage 4 où les gaz soufrés sont disscus puis neutralisés par lavage avec une solution aqueuse stockée dans le récipient de réception 6. La solution de soude contenue dans le récipient 5 est envoyée dans le récipient de réception 6. La solution contenue dans le récipient 6 est alors envoyée via le circuit de lavage E au sommet de la deuxième tour de lavage 4 où elle réagit avec les gaz soufrés contenus dans les fumées F. Là, elle se charge en sulfate de sodium résultant de la réaction des gaz soufrés avec la soude. Cette saumure chargée en sulfate de sodium est ensuite évacuée dans le récipient de stockage 6 d'où elle est soit recyclée via le circuit de lavage E au sommet de la deuxième tour de lavage 4 soit purgée via la canalisation G munie d'une vanne V2, permettant le choix de cette option, au réacteur 1. C'est là que se situe la première différence avec l'art antérieur. La seconde différence est que la première saumure chargée en chlorure et fluorure de calcium est injectée, via une canalisation J séparée et distincte de la canalisation G, également au réacteur 1. Les injections de la saumure chargée en chlorure de calcium et fluorure de calcium d'une part et de la saumure provenant de la deuxième tour de lavage 4 chargée en sulfate de sodium se font alternativement.

Ceci est effectué comme illustré dans la figure 2, par l'ouverture soit de la vanne V2 soit de la vanne V1.

Comme également illustré en figure 2, il existe une portion, notée A, d'alimentation, du réacteur 1 dans laquelle circulent successivement les deux solutions. Ces deux solutions circulent également successivement dans le système (non représenté) d'injection dans le réacteur 1.

Afin d'éviter le bouchage de cette portion A de canalisation et d'équipement d'injection, le procédé de l'invention et l'installation de l'invention prévoient un circuit I, I1 de rinçage de cette canalisation A et de cet équipement d'injection.

Selon un mode de réalisation particulier illustré à la figure 2, ce circuit de rinçage I, I1 comprend un premier circuit I alimenté par exemple en eau par une vanne V4 amenant cette eau à la sortie en aval de la vanne d'arrêt V1 située sur la canalisation J et reliant la vanne V1 à la portion de canalisation A, débouchant par l'intermédiaire de l'équipement d'injection, dans le réacteur 1.

Afin de perfectionner le circuit de rinçage I, I1, ce circuit comporte de plus, un circuit I1 alimentant par l'intermédiaire d'une vanne V3, en liquide de rinçage, par exemple de l'eau, la même canalisation A et équipement d'injection du réacteur 1. Ce circuit I1 part de la vanne V3 et arrive en aval de la vanne V2 qui permet l'alimentation par l'intermédiaire de la canalisation G du réacteur 1 en saumure provenant de la seconde tour de lavage 4.

Un exemple de mise en oeuvre du procédé et de l'installation de l'invention est donc le suivant :

Première étape : injection dans le réacteur L de la saumure chargée en chlorure de calcium, fluorure de calcium et chaux provenant du récipient 9 par l'intermédiaire de la canalisation J. Dans cette étape, la vanne V1 est en position ouverte et les vannes V2, V3 et V4 sont en position fermée. Cette injection durera par exemple 15 minutes ;

Deuxième étape : rinçage à l'eau pendant 30 secondes de la canalisation A et de l'équipement d'injection en fermant la vanne V1 et en ouvrant la vanne V4, les vannes V2 et V3 étant toujours fermées.

Ainsi l'eau circule à travers la canalisation notée I et la canalisation notée A et passe à travers l'équipement d'injection dans le réacteur 1. Ce rinçage a typiquement une durée de 30 secondes ;

Troisième étape : injection de la saumure, chargée en sulfate de sodium provenant du récipient 6, dans le réacteur 1 en ouvrant la vanne V2, et en fermant la vanne V4, les vannes V1 et V3 étant toujours maintenues fermées. Une telle injection durera typiquement 7 minutes.

Quatrième étape : rinçage à l'eau pendant 30 secondes des parties traversées par la saumure chargée en sulfate de sodium en fermant la vanne V2 et en ouvrant la vanne V3, les vannes V1 et V4 étant maintenues fermées.

Un nouveau cycle de ces quatre étapes séquentielles est ensuite répété.

La saumure chargée en chlorure de calcium et en fluorure de calcium pouvant également contenir des particules de chaux en suspension et/ou être saturée en chlorure de calcium et/ou fluorure de calcium, afin d'éviter, dans les cas extrêmes, un dépôt de ces particules de chaux et/ou de chlorure de calcium et/ou fluorure de calcium, dans la canalisation J, le procédé et l'installation de l'invention peuvent prévoir un système de recirculation de la saumure provenant du récipient 9, vers ce même récipient 9 lorsqu'on ne réalise pas l'injection de la saumure dans le réacteur 1. A cet effet, comme illustré en figure 2, la vanne V1 est une vanne à trois voies reliée par une première voie à la canalisation J, une seconde voie à la partie de canalisation A et par la troisième voie à une canalisation supplémentaire notée H dans la figure 2 allant de la vanne V1 vers le récipient 9. Ainsi, la vanne V1 en position dite "ouverte" permettra l'injection de la saumure provenant du récipient 9 dans le réacteur 1 et lorsqu'en position dite "fermée" le retour de la saumure arrivant par la canalisation J au récipient 9 par la canalisation H. Ce système de recirculation permet d'éviter les éventuels dépôts des particules en suspension.

Bien que non représentée sur la figure 2, il apparaîtra clairement à l'homme spécialisé dans l'art qu'une telle configuration peut également être prévue pour la recirculation de la saumure chargée en sulfate de sodium provenant du récipient 6, si cela s'avère nécessaire.

Dans ce cas la vanne V2 sera également une vanne à trois voies reliée à une canalisation (non représentée allant de la vanne V2 vers le récipient 6.

Les vannes citées ici pourront être commandées électriquement par des relais temporisés ou à l'aide d'un automate programmable.

Alors que le procédé de l'invention et un exemple d'installation pour la mise en oeuvre de ce procédé ont été décrits en relation avec un procédé et une installation de traitement des fumées issues de l'incinération de déchets ménagers et/ou industriels, il apparaîtra de façon évidente à toute personne specialisée dans l'art que le système d'injections alternées et de rinçage des parties de canalisation communes décrit ci-dessus peut s'appliquer dans tous les cas où l'on est en présence de deux ou plus fluides qui lorsque mis en contact forment un dépôt menant au bouchage d'une installation.

Ainsi, cette installation peut trouver application dans le domaine de la fabrication des produits alimentaires. Dans un tel cas, elle ne comporterait bien entendu pas spécifiquement les équipements décrits précédemment tels que le réacteur de refroidissement de gaz, le dépoussiéreur et les deux tours de lavage. Ainsi, on pourrait utiliser le principe de l'alimentation séparée avec une partie commune très courte, en prévoyant un système de rinçage de cette partie très courte, par exemple lorsque l'on souhaite injecter pour une raison quelconque deux types de solutions qui lorsque mises ensemble forment un précipité.

C'est dire que l'invention n'est nullement limitée aux modes de réalisation décrits qui n'ont été donnés qu'à titre d'exemple.

Au contraire, l'invention comprend tous les équivalents techniques des moyens décrits ainsi que leurs combinaisons si celles-ci sont effectuées suivant son esprit.

Egalement, le nombre de solutions à ne pas mélanger peut être supérieur à deux.

**Revendications**

1. Procédé de traitement des fumées (F) produites lors de la combustion de déchets ménagers et/ou industriels du type consistant à :

   - évaporer une solution aqueuse et/ou une suspension aqueuse, dans un réacteur (1), en refroidissant lesdites fumées (F),

   - séparer les produits solides, entraînés par les fumées (F), de la phase gazeuse dans un dépoussiéreur (2),

   - solubiliser les gaz acide chlorhydrique et acide fluorhydrique contenus dans les fumées (F) par lavage avec une solution neutralisée à la chaux, dans une première tour de lavage (3),

   - solubiliser les gaz soufrés contenus dans les fumées (F), par lavage avec une solution neutralisée à a soude, dans une deuxième tour de lavage (4),

- injecter et évaporer les purges des circuits de lavage desdites première et deuxième tour de lavage (3, 4), dans le réacteur (1),

**caractérisé en ce que** :

- les purges précitées sont injectées cycliquement et alternativement dans le réacteur (1), chaque injection d'une dite solution usée étant suivie d'un rinçage des parties communes (A) du circuit d'injection dans le réacteur (1), dans lesquelles les deux solutions circulent alternativement.

2. Installation pour la mise en oeuvre, notamment d'un procédé de traitement des fumées (F) produites lors de la combustion de déchets ménagers et/ou industriels, du type comprenant :

- un réacteur (1),

- un dépoussièreur (2),

- une première tour de lavage (3),

- une seconde tour de lavage (4),

**caractérisée en ce qu'**elle comprend de plus :

- une canalisation (G) allant du circuit de lavage (E) de la deuxième tour de lavage (4) jusqu'à la vanne d'arrêt (V2) reliant la canalisation (G) à la canalisation (A), cette canalisation (A) débouchant dans le réacteur (1),

- une canalisation (J) allant du récipient (9) de réception et de neutralisation des purges de lavage provenant de la première tour de lavage (3) jusqu'à la vanne d'arrêt (V1) reliant la canalisation (J) à la canalisation (A) précitée, et

- un circuit (I, I1) de rinçage de la canalisation (A) précitée.

3. Installation selon la revendication 2, **caractérisée en ce qu'**elle comprend de plus une canalisation (H) allant de la vanne (V1) audit récipient (9) et **en ce que** la vanne (V1) est une vanne à trois voies qui permet en position dite "ouverte" l'injection de la solution usée, provenant du récipient (9), dans le réacteur (1) et, en position dite "fermée", la circulation de la solution usée provenant du récipient (9) jusqu'à la vanne (V1), par la canalisation (I), et de la vanne (V1) au récipient (9) par la canalisation (H).

4. Installation selon la revendication 2 ou la revendication 3, **caractérisée en ce que** le circuit de rinçage (I, I1) comprend un premier circuit de rinçage (I) muni d'une vanne V4 qui est relié à la canalisation (J) à la sortie de la vanne (V1) elle-même reliée à la canalisation (A).

5. Installation selon l'une quelconque des revendications 2 à 4, **caractérisée en ce que** le circuit de rirçage (I, I1) comprend un second circuit (I1) de rinçage muni d'une vanne V3 relié à la sortie de la vanne (V2) au point où celle-ci relie la canalisation (G) à la canalisation A.

6. Installation selon l'une quelconque des revendications 2 à 5, **caractérisée en ce qu'**il comprend de plus une canalisation allant de la vanne (V2) précitée audit récipient de réception (6) et **en ce que** la vanne (V2) est une vanne à trois voies qui en position dite "ouverte" permet l'injection du liquide provenant du récipient (6) dans le réacteur (1) et en position dite "fermée" permet la circulation du liquide du récipient (6) jusqu 'à la vanne (V2) par la canalisation (G) et de la vanne (V2) dans le récipient (6) par ladite canalisation.

**Patentansprüche**

1. Verfahren zur Behandlung von Rauchgasen (F), die bei der Verbrennung von Haushalts- und / oder Industrieabfällen produziert werden, von der Art, umfassend:

- verdampfen einer wasserhaltigen Lösung und / oder einer wasserhaltigen Suspension in einem Reaktor (1) unter Abkühlen besagter Rauchgase (F),
- trennen der Feststoffe, die von den Rauchgasen (F) mitgenommen wurden, von der gashaltigen Phase in einem Staubabscheider (2),
- lösen der in den Rauchgasen (F) enthaltenen Wasserstoffchlorhydridgasen und der Flußsäure durch Waschen mit einer durch Kalk neutralisierten Lösung in einem ersten Waschturm (3)
- lösen der in den Rauchgasen (F) enthaltenen schwefelhaltigen Gase durch Waschen in einer mit Soda neutralisierten Lösung in einem zweiten Waschturm (4),
- einstrahlen und verdampfen der Ausblasungen der Waschkreisläufe besagten ersten und zweiten Waschturms (3, 4) im Reaktor (1),

   **dadurch gekennzeichnet, daß**:

- die vorgenannten Ausblasungen werden zyklisch und alternativ in den Reaktor (1) eingestrahlt wobei auf jede Einstrahlung einer besagten gebrauchten Lösung eine Spülung der gemeinsamen Teile (A) des Einstrahlkreislaufs im Reaktor (1) folgt, in denen die zwei Lösungen alternativ umlaufen.

2. Einrichtung für die Umsetzung, insbesondere eines Verfahrens zur Behandlung von Rauchgasen (F), die bei der Verbrennung von Haushalts- und / oder Industriemüll produziert werden, von der Art, umfassend:

- einen Reaktor (1),
- einen Staubabscheider (2),
- einen ersten Waschturm (3),
- einen zweiten Waschturm (4),

**dadurch gekennzeichnet, daß** sie weiterhin unfaßt:

- eine Kanalisation (G), die vom Waschkreislauf (E) des zweiten Waschturms (4) bis zum Absperrschieber (V2) verläuft, wobei die Kanalisation (G) mit der Kanalisation (A) verbunden wird, wobei diese Kanalisation (A) in einen Reaktor (1) einmündet,
- eine Kanalisation (J), die vom Behälter (9) zur Aufnahme und Neutralisierung der Waschausblasungen, die aus dem ersten Waschturm (3) kommen, bis zum Absperrschieber (VI) verläuft, der die Kanalisation (J) mit besagter Kanalisation (A) verbindet, und
- einen Spülkreislauf (I, II) der vorgenannten Kanalisation (A).

3. Einrichtung gemäß Anspruch 2, **dadurch gekennzeichnet, daß** sie weiterhin eine Kanalisation (H) umfaßt, die von dem Schieber (VI) des besagten Behälters (9) verläuft und daß der Schieber (VI) ein Drei-Wege-Schieber ist, der in der sogenannten "offenen" Position das Einstrahlen der aus dem Behälter (9) stammenden gebrauchten Lösung in den Reaktor (1) erlaubt, und in der sogennanten "geschlossenen" Position den Umlauf der aus dem Behälter (9) stammenden gebrauchten Lösurg bis zum Schieber (VI) über die Kanalisation (I) erlaubt, und vom Schieber (VI) über die Kanalisation (H) bis zum Behälter (9).

4. Einrichtung gemäß Anspruch 2 oder 3, **dadurch gekennzeichnet, daß** der Spülkreislauf (I, II) einen ersten Spülkreislauf (I) umfaßt, der mit einem Schieber V4 versehen ist, der am Ausgang des Schiebers (VI) mit der Kanalisation (J) verbunden ist, welcher selbst mit der Kanalisation (A) verbunden ist.

5. Einrichtung gemäß Anspruch 2 bis 4, **dadurch gekennzeichnet, daß** der Spülkreislauf (I, II) einen zweiten Spülkreislauf (II) umfaßt, der mit einem Schieber V3 versehen ist, der am Ausgang des Schiebers (V2) mit dem Punkt verbunden ist, an dem dieser die Kanalisation (G) mit der Kanalisation A verbindet.

6. Einrichtung gemäß Anspruch 2 bis 5, **dadurch gekennzeichnet, daß** sie weiterhin eine Kanalisation umfaßt, die von vorgenanntem Schieber (V2) zu besagtem Aufnahmebehälter (6) verläuft und daß der Schieber (V2) ein Drei-Wege-Schieber ist, der in der sogenannten "offenen" Position das Einstrahlen von aus cem Behälter (6) stammenden Flüssigkeit in den Reaktor (1) erlaubt und in der sogenannten "geschlossenen" Position den Umlauf der Flüssigkeit des Behälters (6) über die Kanalisation (G) bis zum Schieber (V2) und vom Schieber (V2) über besagte Kanalisation im Behälter (6) erlaubt.

**Claims**

1. Method for treating flue gases (F) produced during the combustion of household and/or industrial waste and of the type consisting of :

- evaporating an aqueous solution and/or aqueous suspension in a reactor (1) by cooling said flue gases (F),
- separating the solid products driven by the flue gases (F) from the gas phase in a dust-remoV1ng machine (2),
- rendering dissolvable the hydrofluoric and hydrochloric acid gases contained in the flue gases (F) by washing with a solution neutralised with lime in a first washing tower (3),
- rendering dissolvable the sulphurous gases contained in the flue gases (F) by washing with a solution neutralised with sodium carbonate in a second Washing tower (4),
- injecting and evaporating the purgings of the washing circuits of said first and second washing towers (3, 4) in the reactor (1),

**characterised in that** :

- said purgings are injected cyclically and alternately into the reactor (1), each injection of a given used solution being followed by a rinsing of the common portions (A) of the injection circuit in the reactor (1) in which the two solutions circulate alternately.

2. Installation for implementing in particular a method for treating flue gases (F) produced during the combustion of household and/or industrial waste and of the type including :

- a reactor (1),
- a dust-remover (2),
- a first washing tower (3),
- a second washing tower (4),

  **characterised in that** it in addition includes :

- a pipe (G) starting from the washing circuit (E) of the second washing tower (4) up to the stop valve (V2) connecting the pipe (G) to the pipe (A), said pipe (A) opening into the reactor (1),
- a pipe (J) starting from the neutralisation and collecting basin (9) of the washing purgings originating from the first washing tower (3) to the stop valve (V1) connecting the pipe (J) to said pipe (A), and
- a circuit (I, I1) for rinsing said pipe (A).

3. Installation according to claim 2, **characterised in that** it further includes a pipe (H) starting from the valve (V1) up to said basin (9), and **in that** the vaivs (V1) is a three-channel valve permitting in an 'open' position injection of the used solution originating from the basin (9) in the reactor (1), and in a 'closec' position circulation of the used solution derived from the basin (9) to the valve (V1) V1a the pipe (I) and from the valve (V1) to the basin (9) Via the pipe (H).

4. Installation according to claim 2 or 3, **characterised in that** the rinsing circuit (I, I1) includes a first rinsing circuit (I) fitted with a valve V4 connected to the pipe (J) at the outlet of the valve (V1) connected to the pipe (A).

5. Installation according to any one of claims 2 to 4, **characterised in that** the rinsing circuit (I, I1 includes a second rinsing circuit (I1) fitted with a valve V3 connected to the outlet of the valve (V2) at the point where the latter connects the pipe (G) to the pipe A.

6. Installation according to any one of claims 2 to 5, **characterised in that** it further includes a pipe starting from said valve (V2) as far as said collecting basin (6), and **in that** the valve (V2) is a three-channel valve which in an "open" position allows for injection of the liquid derived from the basin (6) into the reactor (1), and in a "closed'" position allows for circulation of the liquid from the basin (6) to the valve (V2) V1a the pipe (G) and from the valve (V2) into the basin (6) V1a said pipe.

Fig. 1

EP 0 798 031 B1

Fig.2

V4
V3
V2
V1
I
I1
A
F
D
G
H
1
2
3
4
F
E
B
V7
C
V8
V5
8
V6
9
J
V9
K
D
7
5
6
G
10